Europäisches Patentamt

European Patent Office

Office européen des brevets

(19)

(11) Numéro de publication : **0 010 476**
**B1**

# (12) FASCICULE DE BREVET EUROPÉEN

(45) Date de publication du fascicule du brevet :
**19.05.82**

(21) Numéro de dépôt : **79400706.2**

(22) Date de dépôt : **05.10.79**

(51) Int. Cl.³ : **F 16 H 21/10**, F 16 H 37/12//
B23Q7/00

(54) **Mécanisme pour l'obtention d'une trajectoire fermée de forme désirée.**

(30) Priorité : **06.10.78 FR 7828688**

(43) Date de publication de la demande :
**30.04.80 (Bulletin 80/09)**

(45) Mention de la délivrance du brevet :
**19.05.82 Bulletin 82/20**

(84) Etats contractants désignés :
**CH DE GB IT SE**

(56) Documents cités :
**TRANSACTIONS OF THE ASME JOURNAL OF
ENGINEERING FOR INDUSTRY, vol. 97, no. 2,
mai 1975, New York, US, F.J. KAY et al. : « Adjustable mechanisms for exact path generation »,
pages 702-707**

(73) Titulaire : **INADEX Société anonyme dite:
3 rue Violet
F-25000 Besançon (FR)**

(72) Inventeur : **Blum, André
26, Chemin du Grand Buisson
F-25000 Besançon (FR)**

(74) Mandataire : **Bonnetat, Christian
Cabinet PROPI Conseils 23 rue de Léningrad
F-75008 Paris (FR)**

Imprimerie Jouve, 18, rue St-Denis, 75001 Paris, France

## Mécanisme pour l'obtention d'une trajectoire fermée de forme désirée.

La présente invention concerne un mécanisme pour l'obtention d'une trajectoire fermée de forme désirée.

On connaît déjà des mécanismes dits « à quatre barres », c'est-à-dire comportant trois solides agencés de façon que le solide intermédiaire soit articulé à chacun des deux solides d'extrémité tandis que chacun de ceux-ci peut par ailleurs tourner autour d'une articulation fixe qui lui est associée. Lorsque dans un tel mécanisme, les articulations des solides sont coplanaires, ce mécanisme est dit « plan ». Dans le cas inverse, il est dit « dans l'espace ».

Si, dans un tel mécanisme aussi bien « plan » que « dans l'espace », l'un des solides d'extrémité est entraîné en rotation autour de la première articulation fixe qui lui est associée de façon que son articulation au solide intermédiaire décrive une trajectoire circulaire centrée sur ladite articulation fixe, l'autre solide d'extrémité tourne également autour de la seconde articulation fixe qui lui est associée de façon que son articulation au solide intermédiaire décrive une trajectoire circulaire centrée sur ladite seconde articulation fixe. En revanche, chaque point du solide intermédiaire, excepté les deux articulations aux solides d'extrémité, décrit une trajectoire fermée de forme non circulaire. La forme d'une telle trajectoire fermée dépend de nombreux paramètres : cinq dans le cas d'un mécanisme plan, huit dans le cas d'un mécanisme « dans l'espace ». Aussi, il est pratiquement impossible de régler simultanément la totalité de ces nombreux paramètres pour communiquer à l'un des points du solide intermédiaire une trajectoire de forme déterminée.

Dans l'article « Ajustable Mechanisms for Exact Path Generation » de F. J. KAY et R. E. HAWS, publié dans le périodique « Transactions of the A.S.M.E. Journal of Engineering for Industry », vol. 97, N° 2, mai 1975, pages 702 à 707, on décrit un mécanisme à « quatre barres » dans lequel un point lié à une bielle décrit une trajectoire de forme désirée, après quoi la trajectoire de l'articulation entre la vielle et la manivelle d'entrée est corrigée. La trajectoire désirée peut être fermée.

La présente invention a pour objet un mécanisme de ce type destiné à animer de façon répétitive un organe de travail selon un mouvement en L.

A cette fin, selon l'invention, le mécanisme destiné à animer de façon répétitive un organe de travail selon un mouvement en L et du type à quatre barres, c'est-à-dire comportant trois solides agencés de façon que le solide intermédiaire soit articulé à chacun des deux solides d'extrémité, tandis que chacun de ceux-ci peut tourner autour d'une articulation fixe qui lui est associée, l'un desdits solides d'extrémité étant entraîné en rotation autour de son axe d'articulation fixe pour être le moteur des deux autres solides, au moins l'un des points du solide intermédiaire décrivant une trajectoire fermée de forme au moins grossièrement voisine de la forme d'une trajectoire désirée, et la trajectoire normalement circulaire d'au moins l'une des deux articulations du solide intermédiaire étant corrigée pour amener la trajectoire décrite par ledit point du solide intermédiaire à être au moins sensiblement identique à la trajectoire désirée, est caractérisé en ce que le solide d'extrémité moteur est assimilable à une tige de longueur variable dont la longueur est déterminée pour chaque angle de rotation pour que l'une de ses extrémités décrive la trajectoire circulaire corrigée adéquate, en ce que le solide intermédiaire est assimilable à un premier parallélogramme déformable dont un premier côté est solidaire d'une tige articulée sur le solide moteur et dont un second côté contigu audit premier côté comporte le point qui décrit la trajectoire souhaitée, en ce que l'autre solide d'extrémité est assimilable à un second parallélogramme déformable comportant deux articulations fixes et en ce que les deux parallélogrammes déformables sont articulés l'un sur l'autre par l'intermédiaire de quatre points d'articulation disposés suivant les sommets d'un troisième parallélogramme dont les diagonales sont respectivement formées par le côté du premier parallélogramme opposé audit second côté et par le côté du second parallélogramme opposé aux deux articulations fixes.

De préférence, le mécanisme selon l'invention est tel que le solide d'extrémité moteur comporte une came fixe et un suiveur de came définissant la trajectoire corrigée de ladite articulation, ladite came étant fermée et entourant l'articulation fixe dudit solide d'extrémité.

Le suiveur peut être monté sur une manivelle dont le maneton tourne autour de l'articulation fixe correspondante. Il peut, en variante, être monté sur une tige pouvant coulisser dans un manchon monté rotatif autour de ladite articulation fixe. Il peut également être solidaire d'un agencement élastiquement déformable pouvant tourner autour de ladite articulation fixe.

Les figures du dessin annexé feront bien comprendre comment l'invention peut être réalisée.

La figure 1 illustre un mécanisme connu à quatre barres.

La figure 2 illustre un autre mécanisme connu à quatre barres.

Les figures 3, 4 et 5 illustrent des dispositifs pouvant être utilisés dans le mécanisme selon l'invention.

La figure 6 montre schématiquement le mécanisme selon l'invention.

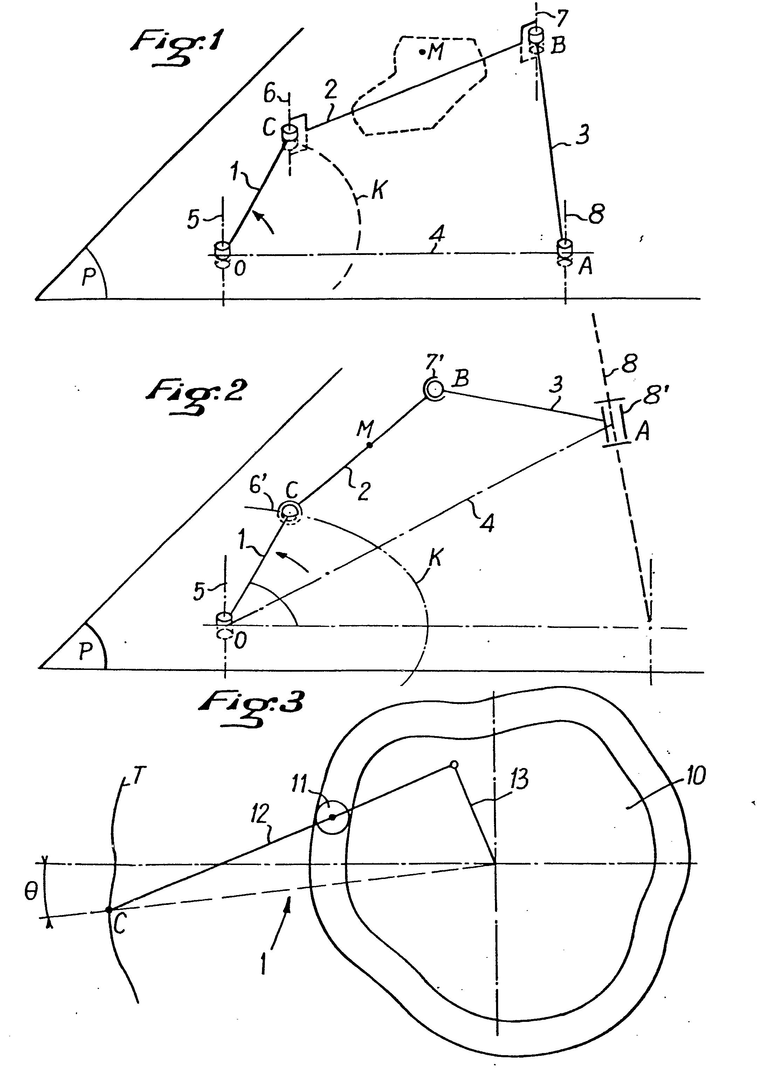

Sur les figures 1 et 2, on a représenté deux mécanismes à quatre barres. Ces deux mécanismes sont composés chacun de trois solides 1, 2, 3 représentés schématiquement sous la forme de barres et comportant deux articulations fixes en O et en A. La ligne OA peut être considérée comme une quatrième « barre » 4.

Dans le mécanisme de la figure 1, les quatre barres 1 à 4 sont disposées dans un même plan P et sont articulées les unes aux autres autour d'axes de rotation 5 à 8, orthogonaux audit plan. La barre 4 est solidaire du plan P et les axes d'articulation 5 et 8 de ladite barre aux barres 1 et 3 respectivement passent par ses extrémités O à A. La barre 2 est articulée aux barres 1 et 3, au moyen des articulations 6 et 7 respectivement, passant par les extrémités C et B de ladite barre 2.

Le mécanisme de la figure 2 est semblable à celui de la figure 1, mais dans ce cas, seule la barre 1 est disposée dans le plan P. Les barres 2 et 3 sont situées hors de ce plan et les axes d'articulation 6 et 7 sont remplacés par des rotules 6' et 7'. Un palier fixe 8' est prévu sur la barre 3, à l'extérieur du plan P.

Dans ces mécanismes, la barre 1 est considérée comme organe moteur et tourne autour de l'axe 5 dans le plan P, son extrémité C décrivant un cercke K de centre O. Il en résulte que les points du solide 3 décrivent des trajectoires·circulaires autour de l'axe 8. En revanche, les points du solide 2, exceptés les points C et B, décrivent des trajectoires complexes fermées, quand l'organe moteur 1 tourne autour de son axe 5. De telles trajectoires sont planes dans le cas du mécanisme de la figure 1 et sont des courbes de l'espace dans le cas du mécanisme de la figure 2.

On sait qu'en choisissant judicieusement les éléments de ces mécanismes, on peut obtenir des trajectoires particulières pour les points du solide 2. Cependant, les paramètres de la trajectoire d'un point du solide 2 sont nombreuses (5 dans le cas du mécanisme de la figure 1, 8 dans le cas du mécanisme de la figure 2) et ils font intervenir des fonctions complexes de l'angle de rotation de l'organe moteur 1. Il est donc difficile, sinon impossible, de trouver les paramètres d'un tel mécanisme pour obtenir une trajectoire particulière.

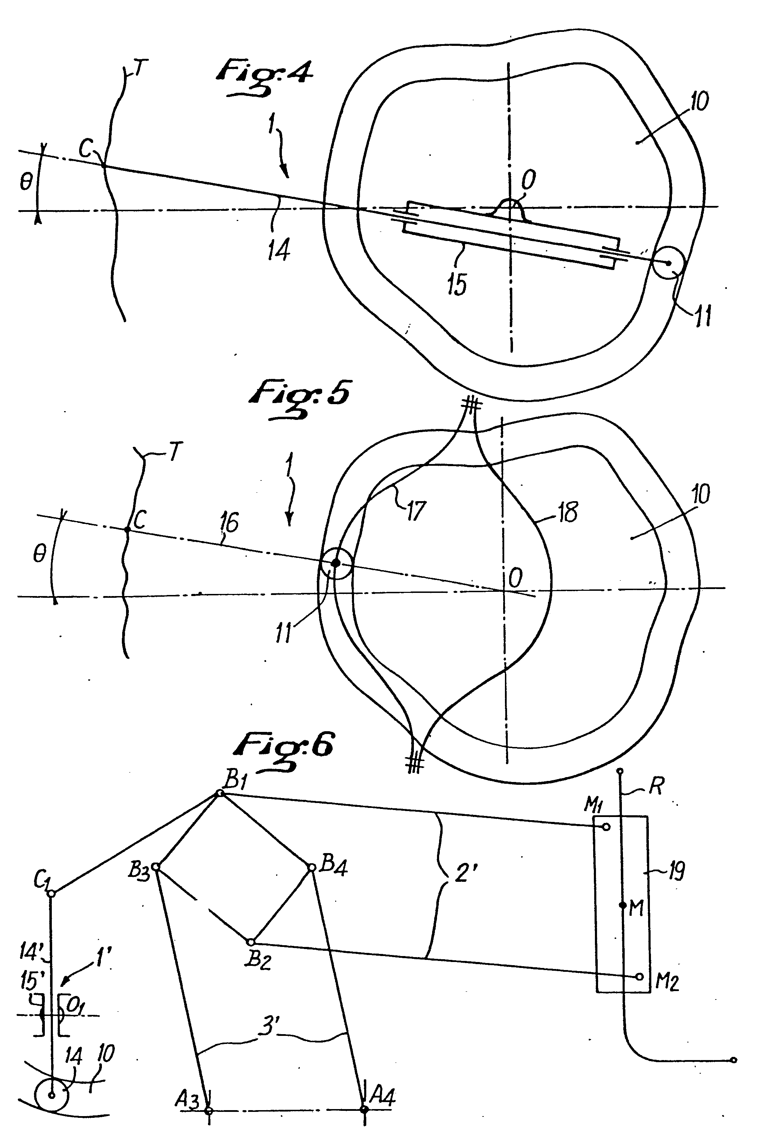

Pour obtenir pour un point M du solide 2 une trajectoire particulière désirée, on adjoint à un tel mécanisme un dispositif de correction de la trajectoire circulaire K de l'extrémité C de l'organe moteur 1. Comme illustré sur les figures 3, 4 et 5, le dispositif de correction comporte une came 10 fermée, entourant le point O et coopérant avec un suiveur de came 11, par exemple un galet. Sur la figure 3, le galet 11 est monté sur une manivelle 12, dont le maneton 13 tourne autour de l'articulation O. Dans ce cas, la « barre » variable est formée par la ligne OC joignant l'articulation O à l'extrémité libre C de la manivelle 12, sur laquelle est articulée la barre 2 (non représentée sur la figure 3). Ainsi, l'articulation C suit une courbe (T), qui permet au point M du solide 2 de suivre une trajectoire de forme désirée.

Dans le dispositif de la figure 4, le suiveur 11 est solidaire d'une tige 14 de longueur fixe, susceptible de coulisser dans un manchon 15 tournant autour du point O.

Dans le dispositif de la figure 5, le suiveur 11 est solidaire d'une tige 16 de longueur fixe et d'un dispositif élastique par exemple composé de deux lames élastiques 17 et 18, susceptibles de tourner autour du point O.

Pour obtenir le résultat désiré, c'est-à-dire une trajectoire déterminée pour le point M, on peut déterminer la came 10 et la trajectoire T par le calcul. Cependant, il est souvent plus simple d'imposer au point M de décrire la trajectoire désirée, pour déterminer expérimentalement la trajectoire T et la came 10. A cet effet, on réalise le mécanisme en vraie grandeur et on peut remplacer le galet 11 par une fraise de même diamètre. Cette fraise usine donc le profil de la came 10. Ensuite, en remplaçant la fraise par le galet 11, on est sûr que le point C décrit la trajectoire circulaire corrigée T et que le point M décrit la trajectoire désirée.

Sur la figure 6, on a illustré le mécanisme selon l'invention susceptible de communiquer à un organe de préhension non représenté, mais fixé au point M, une trajectoire fermée R en forme de L, par exemple pour saisir une pièce sur une presse en vue de la déposer en dehors de celle-ci ou inversement, de positionner une ou plusieurs pièces sur une presse. Ce mécanisme comporte un solide d'extrémité moteur 1', par exemple semblable à celui de la figure 4, c'est-à-dire comportant une barre 14' de longueur fixe, coulissant dans un manchon 15' tournant autour d'une articulation $O_1$, ce coulissement pendant la rotation étant guidé par la coopération d'un galet 11 et d'une came 10.

Au point $C_1$ de la tige 14', décrivant la trajectoire circulaire corrigée, est articulé un solide $C_1B_1M_1$, qui avec un solide $B_2M_2$ et un solide 19, forme le solide intermédiaire 2'. Le segment $B_2M_2$ est parallèle à $B_1M_1$ et de même longueur, de sorte que $B_1M_1B_2M_2$ forme un premier parallélogramme. Le solide 19 qui porte le point M décrivant la trajectoire R est articulé à ce premier parallélogramme en $M_1$ et $M_2$.

Le solide d'extrémité 3' est formé par deux barres parallèles $A_3B_3$ et $A_4B_4$ de même longueur, articulées en des points fixes $A_3$ et $A_4$. Elles forment un second parallélogramme déformable.

Les parallélogrammes déformables $B_1M_2B_2M_2$ et $A_3B_3A_4B_4$ sont articulés l'un à l'autre en $B_1B_2B_3$ et $B_4$, les côtés $B_1B_2$ (parallèles à $M_1M_2$) et $B_3B_4$ (parallèles à $A_3A_4$) formant les diagonales du parallélogramme $B_1B_2B_3B_4$.

Les points $A_3$ et $A_4$ étant fixes, le solide 19, articulé en $M_1$ et $M_2$ reste parallèle à lui-même.

Quand le solide moteur 1' tourne autour du point $O_1$, il oblige le point $C_1$ à décrire la courbe T et le solide 19 suit un mouvement de translation suivant la trajectoire R.

Ainsi, à partir de la rotation du solide 1', on a obtenu la trajectoire désirée pour le point M.

**Revendications**

1. Mécanisme destiné à animer de façon répétitive un organe de travail selon un mouvement en L et du type à quatre barres (1 à 4), c'est-à-dire comportant trois solides (1,2,3) agencés de façon que le solide intermédiaire (2) soit articulé à chacun des deux solides d'extrémité, tandis que chacun de ceux-ci peut tourner autour d'une articulation fixe (5,8) qui lui est associée, l'un desdits solides d'extrémité étant entraîné en rotation autour de son axe d'articulation fixe pour être le moteur des deux autres solides, au moins l'un des points du solide intermédiaire décrivant une trajectoire fermée de forme au moins grossièrement voisine de la forme d'une trajectoire désirée, et la trajectoire normalement circulaire d'au moins l'une des deux articulations du solide intermédiaire étant corrigée pour amener la trajectoire décrite par ledit point du solide intermédiaire à être au moins sensiblement identique à la trajectoire désirée, caractérisé en ce que le solide d'extrémité moteur (1') est assimilable à une tige de longueur variable dont la longueur est déterminée pour chaque angle de rotation pour que l'une de ses extrémités décrive la trajectoire circulaire corrigée adéquate, en ce que le solide intermédiaire (2') est assimilable à un premier parallélogramme déformable $(B_1M_1B_2M_2)$ dont un premier côté $(B_1M_1)$ est solidaire d'une tige $(B_1C_1)$ articulée sur le solide moteur (1') et dont un second côté $(M_1M_2)$ contigu audit premier côté $(B_1M_1)$ comporte le point (M) qui décrit la trajectoire souhaitée, en ce que l'autre solide d'extrémité (3') est assimilable à un second parallélogramme déformable $(A_3B_3A_4B_4)$ comportant deux articulations fixes $(A_3A_4)$, et en ce que les deux parallélogrammes déformables $(B_1M_1B_2M_2$ et $A_3B_3A_4B_4)$ sont articulés l'un sur l'autre par l'intermédiaire de quatre points d'articulation $(B_1B_2B_3B_4)$ disposés suivant les sommets d'un troisième parallélogramme dont les diagonales sont respectivement formées par le côté $(B_1B_2)$ du premier parallélogramme $B_1M_1B_2M_2)$ opposé audit second côté $M_1M_2$ et par le côté $(B_3B_4)$ du second parallélogramme opposé aux deux articulations fixes $(A_3A_4)$.

2. Mécanisme selon la revendication 1, caractérisé en ce que ledit solide d'extrémité moteur (1') comporte une came fixe (10) et un suiveur de came (11) définissant la trajectoire corrigée de ladite articulation, ladite came (10) étant fermée et entourant l'articulation fixe $(O_1)$ dudit solide d'extrémité (1').

3. Mécanisme selon la revendication 2, caractérisé en ce que le suiveur (11) est monté sur une manivelle (12) dont le maneton (13) tourne autour de l'articulation fixe $(O_1)$ correspondante.

4. Mécanisme selon la revendication 2, caractérisé en ce que le suiveur (11) est monté sur une tige (14) pouvant coulisser dans un manchon (15) monté rotatif autour de ladite articulation fixe $(O_1)$.

5. Mécanisme selon la revendication 2, caractérisé en ce que le suiveur de came (11) est solidaire d'un agencement élastiquement (17,18) déformable pouvant tourner autour de ladite articulation fixe $(O_1)$.

**Claims**

1. Mechanism intended for moving in repetitive manner a work member in an L-motion and of the type having four bars (1 to 4), i.e. comprising three bodies (1,2,3) arranged so that the intermediate body (2) is pivoted on each of the two end bodies whilst each of them may rotate about a fixed pivot (5,8) which is associated therewith, one of said end bodies being rotated about its fixed pivot axis to be the motor of the other two bodies, at least one of the points of the intermediate body describing a closed trajectory whose shape is at least roughly similar to the shape of a desired trajectory, and the normally circular trajectory of at least one of the two pivots of the intermediate body being corrected to lead the trajectory described by said point of the intermediate body to be at least substantially identical to the desired trajectory, characterised in that the driving end body (1') is comparable to a rod of variable length, whose length is determined for each angle of rotation so that one of its ends describes the adequate corrected circular trajectory, in that the intermediate body (2') is comparable to a first deformable parallelogram $(B_1M_1B_2M_2)$ of which a first side $(B_1M_1)$ is fast with a rod $(B_1C_1)$ pivoted on the drive body (1') and of which a second side $(M_1M_2)$ contiguous to said first side $(B_1M_1)$ comprises the point (M) which describes the desired trajectory, in that the other end body (3') is comparable to a second deformable parallelogram $(A_3B_3A_4B_4)$ comprising two fixed pivots $(A_3A_4)$, and in that the two deformable parallelograms $(B_1M_1B_2M_2$ and $A_3B_3A_4B_4)$ are pivoted on each other via four pivot points $(B_1B_2B_3B_4)$ disposed at the apices of a third parallelogram of which the diagnolas are respectively formed by the side $(B_1B_2)$ of the first parallelogram $(B_1M_1B_2M_2)$ opposite said second side $M_1M_2$ and by the side $(B_3B_4)$ of the second parallelogram opposite the two fixed pivots $(A_3A_4)$.

2. Mechanism according to Claim 1, characterised in that said driving end body (1') comprises a fixed cam (10) and a cam follower (11) defining the corrected trajectory of said pivot, said cam (10) being closed and surrounding the fixed pivot $(O_1)$ of said end body (1').

3. Mechanism according to Claim 2, characterised in that the follower (11) is mounted on a crank (12) of which the pin (13) rotates about the corresponding fixed pivot $(O_1)$.

4. Mechanism according to Claim 2, characterised in that the follower (11) is mounted on a rod (14) which may slide in a sleeve (15) mounted to rotate about said fixed pivot $(O_1)$.

5. Mechanism according to Claim 2, characterised in that the cam follower (11) is fast with an elastically deformable arrangement (17,18) which may rotate about said fixed pivot $(O_1)$.

**Ansprüche**

1. Mechanismus zum repetitiven Anregen eines Arbeitsgliedes zu L-förmiger Bewegung und als Anordnung mit vier Stäben (1 bis 4) ausgebildet, d.h. bestehend aus drei Festkörpern (1,2,3), die so angeordnet sind, daß der intermediäre Körper (2) an jedem der beiden Endkörper gelenkig aufgehängt ist, während jeder von ihnen um ein ihnen zugeordnetes festes Drehgelenk (5,8) drehbar ist, wobei einer der Endkörper um seine feste Drehachse in Drehung versetzt wird, um den Antrieb der beiden anderen Körper zu ergeben, zumindest einer der Punkte des intermediären Körpers eine geschlossene Bahn beschreibt, die zumindest grobe gesehen der Form einer gewünschten Bahn nahekommt, und die normalerweise kreisförmige Bahn zumindest einer der beiden Drehgelenke des intermediären Körpers korrigiert wird, um die von dem Punkt des intermediären Körpers beschriebene Bahn zumindest im wesentlichen mit der gewünschten Bahn identisch werden zu lassen, dadurch gekennzeichnet, daß der antreibende Endkörper (1') einer Stange von veränderlicher Länge vergleichbar ist, deren Länge für jeden Rotationswinkel bestimmt ist, so daß einer ihrer Enden die adäquate korrigierte Kreisbahn beschreibt, daß der intermediäre Korper (2') einem ersten verformbaren Parallelogramm $(B_1M_1B_2M_2)$ vergleichbar ist, dessen erste Seite $(B_1M_1)$ formschlüssig mit einer Stange $(B_1C_1)$ verbunden ist, die am antreibenden Körper (1') angelenkt ist und dessen zweite Seite $(M_1M_2)$, die an die erste Seite $(B_1M_1)$ unmittelbar angrenzt, den Punkt (M) aufweist, der die gewünschte Bahn beschreibt, daß der andere Endkörper einem zweiten verformbaren Parallelogramm $(A_3B_3A_4B_4)$ vergleichbar ist, das zwei feste Drehgelenke $(A_3A_4)$ aufweist, und daß die beiden verformbaren Parallelogramme $(B_1M_1B_2M_2)$ und $(A_3B_3A_4B_4)$ über vier Drehpunkte $(B_1B_2B_3B_4)$ miteinander schwenkbar sind, die an den Spitzen eines dritten Parallelogramms liegen, dessen Diagonalen jeweils durch die Seite $(B_1B_2)$ des der zweiten Seite $(M_1M_2)$ gegenüberliegenden ersten Parallelogramms $(B_1M_1B_2M_2)$ und durch die Seite $(B_3B_4)$ des den beiden festen Drehgelenken $(A_3A_4)$ gegenüberliegenden zweiten Parallelogramms gebildet sind.

2. Mechanismus nach Anspruch 1, dadurch gekennzeichnet, daß der antreibende Körper (1') einen die korrigierte Bahn des Drehgelenks bestimmenden festen Nocken (10) und einen Nockenstößel (11) aufweist, wobei der Nocken (10) geschlossen ist und das feste Drehgelenk $(O_1)$ des Endkörpers (1') umgibt.

3. Mechanismus nach Anspruch 2, dadurch gekennzeichnet, daß der Nockenstößel (11) auf einer Kurbel (12) montiert ist, deren Zapfen (13) sich um das entsprechende feste Drehgelenk $(O_1)$ dreht.

4. Mechanismus nach Anspruch 2, dadurch gekennzeichnet, daß der Nockenstößel (11) an einer Stange (14) befestigt ist, die in einer Muffe (15) gleiten kann, die um das feste Drehgelenk $(O_1)$ drehbar eingesetzt ist.

5. Mechanismus nach Anspruch 2, dadurch gekennzeichnet, daß der Nockenstößel (11) formschlüssig mit einer elastisch verformbaren Anordnung (17,18) verbunden ist, die um das feste Drehgelenk $(O_1)$ drehbar ist.

Fig. 1

Fig. 2

Fig. 3

0 010 476

Fig.4

Fig.5

Fig.6